# EUROPÄISCHE PATENTSCHRIFT

(11) **EP 2 145 780 B1**
(45) Veröffentlichungstag und Bekanntmachung des Hinweises auf die Patenterteilung: **12.09.2012**
(21) Anmeldenummer: 08012784.8
(22) Anmeldetag: 15.07.2008
(51) Int. Cl.: B60D 1/06

(54) **Mittelbare Schmierung der Zugösenvertikalhubbegrenzungseinrichtung einer Anhängerkupplung**
Indirect lubrication of the towing eye vertical lift limit device
Graissage indirect du dispositif de la limitation du levage vertical d'anneaux d'attelage

(43) Veröffentlichungstag der Anmeldung: 20.01.2010
(73) Patentinhaber: Jost-Werke GmbH, 63263 Neu-Isenburg (DE)
(72) Erfinder: Szczepanek, Udo, 82223 Eichenau (DE)
(74) Vertreter: Trossin, Hans-Jürgen

(56) Entgegenhaltungen:
- EP-A- 1 488 942
- BE-A- 459 197
- DE-A1-102005 022 879
- DE-U1- 20 116 970
- GB-A- 2 251 838
- US-A- 4 008 906

## Beschreibung

Die vorliegende Erfindung betrifft eine Kupplungspfanne für eine Zugöse zur Verbindung mit einer Kupplungskugel einer Kugelkupplung gemäß dem Oberbegriff von Anspruch 1.

Eine derartige Kupplungspfanne ist aus der US-A-4008906 und der BE-A-459197 bekannt.

Im angekuppelten Zustand der Kupplungspfanne, d. h. wenn die Kupplungspfanne zur Zugkraftübertragung auf die Kupplungskugel aufgesetzt ist, wird ein Abheben der Kupplungspfanne von der Kupplungskugel üblicherweise durch einen Niederhalter verhindert, welcher den Bewegungsweg der Kupplungspfanne in Abheberichtung von der Kupplungskugel weg begrenzt. Ein Abschnitt der Kupplungspfanne befindet sich somit in deren angekuppeltem Zustand zwischen der Kupplungskugel und dem Niederhalter. Die der Kupplungskugel zugewandte Seite der Kupplungspfanne ist in der vorliegenden Anmeldung mit "Kupplungsseite" bezeichnet, die entgegengesetzte, dem Niederhalter zugewandte Seite der Kupplungspfanne dagegen mit "Niederhalterseite".

Im Zugbetrieb gelangt der Niederhalter in Kontakt mit dem dafür vorgesehenen Niederhalterkontaktbereich auf der Niederhalterseite der Kupplungspfanne. Zur Erhöhung der Lebensdauer sowohl des Niederhalters als auch der Kupplungspfanne ist es von Vorteil, den Niederhalterkontaktbereich mit Schmiermittel zu versorgen, um eine unerwünschte Reibung zwischen Niederhalterkontaktbereich und Gegenkontaktbereich zu vermindern. Zu diesem Zweck ist es aus dem Stand der Technik, etwa aus der EP-A-1488942, auch bekannt, den Niederhalter hohl auszuführen und mit einem Schmiernippel zu versehen, durch welchen ein Schmiermittel in den Niederhalter und durch diesen zum Gegenkontaktbereich zwischen Niederhalter und Kupplungspfanne geleitet werden kann.

Nachteilig an dieser Lösung ist der hohe Bearbeitungs- und Wartungsaufwand, da zum einen die Kupplungskugel, beziehungsweise der Kupplungsanlagebereich, und zum anderen der Niederhalterkontaktbereich gesondert mit Schmiereinrichtungen versehen und abgeschmiert werden müssen.

Es ist Aufgabe der vorliegenden Erfindung, eine technische Lehre anzugeben, welche die Schmierung des Niederhalterkontaktbereichs der Kupplungspfanne mit Schmiermittel gestattet, welches am Kupplungsanlagebereich vorhanden ist, ohne dass eine Verschmutzung des Kupplungsanlagebereichs von der Niederhalterseite her zu befürchten ist.

Diese Aufgabe wird bei einer gattungsgemäßen Kupplungspfanne dadurch gelöst, dass in dem Kanal ein Ventil vorgesehen ist, welches eine Strömung von Schmiermittel von der Kupplungsseite zur Niederhalterseite gestattet und eine Schmiermittelströmung in entgegengesetzter Richtung sperrt. Dadurch kann Schmutz oder/und Flüssigkeit vom Kupplungsanlagebereich fern gehalten werden.

Zur Erläuterung der Schmiersituation an der erfindungsgemäßen Kupplungspfanne sei darauf hingewiesen, dass jede erfindungsgemäße Ausführungsform einer Kupplungspfanne von einem Kanal durchsetzt ist, welcher den Kupplungsanlagebereich und den Niederhalterkontaktbereich miteinander verbindet. Durch diesen Kanal ist es möglich, Schmiermittel, welches in der Regel am Kupplungsanlagebereich vorhanden ist, zu dem Niederhalterkontaktbereich zu leiten, so dass durch eine Schmierung des Kupplungsanlagebereichs stets der Niederhalterkontaktbereich mit Schmiermittel mitversorgt wird. Das Wartungspersonal beziehungsweise ein Fahrzeugführer braucht in einem besonders einfachen Ausführungsbeispiel der vorliegenden Erfindung lediglich ausreichend Schmiermittel auf die Kupplungskugel aufzutragen, so dass beim Aufsetzen der Kupplungspfanne auf die Kupplungskugel das Schmiermittel, durch das Eigengewicht der Kupplungspfanne belastet und unter Druck gesetzt, durch den Kanal zum Niederhalterkontaktbereich gefördert wird.

Grundsätzlich kann daran gedacht sein, als das oben genannte Ventil ein Rückschlagventil mit einem federbelasteten Ventilkörper, etwa einer federbelasteten Kugel, zu verwenden, wie es etwa aus Schmiernippeln bekannt ist. Bei kalten Temperaturen und dadurch erhöhter Viskosität des Schmiermittels kann jedoch die den Ventilkörper belastende Feder durch den aufgrund der erhöhten Viskosität notwendigen höheren Schmiermitteldruck derart zusammen gedrückt werden, dass im Falle einer üblichen Schraubenfeder deren Windungen in Federlängsrichtung aneinander anliegen oder so zusammen mit dem Ventilkörper das eigentlich dann durchlässige Ventil undurchlässig machen. Diesem unerwünschten Zustand kann durch Verwendung einer Schraubenfeder mit erhöhter Federhärte entgegengewirkt werden. Die Folge dieser Maßnahme ist jedoch, dass das Schmiermittel mit dann höherem Druck durch das Ventil gepresst werden muss, um das Ventil zu öffnen. Eine derart hoher Druck steht häufig im Kupplungsanlagebereich nicht zur Verfügung oder kann konstruktiv bedingt nicht erreicht werden, da vor Erreichen des notwendigen Drucks das Schmiermittel beginnt, an anderen Stellen des Kupplungsanlagebereichs auszutreten. Diese Lösung ist daher zwar grundsätzlich möglich, jedoch nicht bevorzugt.

Eine sichere Strömung von Schmiermittel in lediglich eine Strömungsrichtung, nämlich vom Kupplungsanlagebereich zum Niederhalterkontaktbereich kann in vorteilhafter Weise dagegen dadurch sichergestellt werden, dass das Ventil einen Ventilkörper und ein von diesem gehaltenes elastisches Ventilelement aufweist, welches unter Ausübung von Kraft gegen eine durch seine Materialelastizität bewirkte Rückstellkraft von einer Ventilschließgestalt, in welcher der Kanal durch das Ventilelement unterbrochen ist, in eine Ventilöffnungsgestalt, in welcher der Kanal durch das Ventilelement nicht unterbrochen ist, verformbar ist.

Die bezeichnete Kraft gegen die Materialelastizität wird dabei durch den Schmiermitteldruck, der auf eine Fläche des Ventilelements wirkt, aufgebracht. Hier ist bei hoher Funktionssicherheit nur ein geringer Schmiermitteldruck zur Überwindung der elastischen Rückstellkraft des Ventilelements notwendig. Lediglich der Vollständigkeit halber wird angemerkt, dass das Ventilelement zur Vereinfachung des konstruktiven Aufbaus des Ventils derart am Ventilkörper angeordnet ist, dass es sich ausgehend von seiner Ventilschließgestalt zu seiner Ventilöffnungsgestalt in Richtung vom Kupplungsanlagebereich weg zum Niederhalterkontaktbereich hin verformt.

Vorzugsweise ist das Ventilelement in seiner Ventilschließgestalt, bezogen auf einen unbelasteten Zustand des Ventilelements, verformt. Dadurch kann sichergestellt werden, dass das Ventilelement in seiner Ventilschließgestalt mit einer Schließvorspannkraft an einem Ventilsitz des Ventilkörpers anliegt. Eine derartige Schließvorspannkraft ist erwünscht, da sie von Schmutz oder/und Feuchtigkeit, deren Eintritt in den Kupplungsanlagebereich vom Niederhalterkontaktbereich aus verhindert werden soll, überwunden werden muss, damit der Schmutz oder/und die Feuchtigkeit in den Kupplungsanlagebereich gelangen können.

Grundsätzlich ist es denkbar, dass Ventil als Blattventil auszugestalten, mit einem einseitig eingespannten Elastomerbogenelement. Eine vorteilhaft große Durchtrittsfläche von Schmiermittel kann dagegen dadurch erhalten werden, dass das Ventilelement einen Ring umfasst, welcher in einem zentralen Abschnitt am Ventilkörper gehalten ist und in seiner Ventilschließgestalt in seinem Außenumfangsbereich an einem Ventilsitz des Ventilkörpers anliegt. Damit ist außerdem der Vorteil verbunden, dass eine Mehrzahl von Durchtrittskanälen für das Schmiermittel längs einer Umfangsrichtung des ringförmigen Ventilelements verteilt ausgebildet sein können, so dass das Schmiermittel in jedem der Durchtrittskanäle im Wesentlichen die gleiche elastische Rückstellkraft zur Öffnung des Ventils zu überwinden hat.

Besonders vorteilhaft umfasst das Ventilelement eine Ringscheibe, also einen Ring mit zumindest abschnittsweise ebenen Stirnflächen. Derartige ebene Stirnflächenabschnitte können ein dichtendes Anliegen des Ventilelements am Ventilsitz gewährleisten. Aus diesem Grunde ist bevorzugt wenigstens der Bereich des Ventilelements, welcher zur Anlage an einem Ventilsitz vorgesehen ist, eben ausgebildet.

Mit "Außenumfangsbereich" ist ein dem Außenumfang des ringförmigen Ventilelements naher Bereich einer Stirnfläche bezeichnet. Es soll auch nicht ausgeschlossen sein, dass das Ventilelement mit dem Außenumfang selbst, also mit seiner Mantelfläche oder einem Abschnitt derselben in seiner Ventilschließgestalt dichtend an dem Ventilkörper anliegt, wenngleich dies nicht bevorzugt ist.

Zur sicheren Dichtungsfunktion des Ventils gegen unerwünschten Durchtritt von Schmutz oder/und Feuchtigkeit entgegen der vorgesehenen Schmiermittel-Strömungsrichtung ist es bevorzugt, wenn der Ventilkörper einen ringförmigen Ventilsitz aufweist, an welchem das Ventilelement in seiner Ventilschließgestalt mit seinem Außenumfangsbereich anliegt, wobei die Auflagefläche des Ventilsitzes gegenüber einem Haltebereich, an welchem das Ventilelement am Ventilkörper gehalten ist, derart versetzt vorgesehen ist, dass das Ventilelement verformt an dem Ventilsitz aufliegt. Der Versatz des Ventilsitzes gegenüber dem Haltebereich des Ventilelements, vorzugsweise in Schmiermittel-Strömungsrichtung, dient dazu, zu gewährleisten, dass das Ventilelement aufgrund seiner Verformung in seiner Ventilschließgestalt mit der ober bezeichneten Schließvorspannkraft auf dem Ventilsitz aufliegt.

Das bevorzugte ringförmige Ventilelement ist aus Gründen einer Bereitstellung einer symmetrischen Schließkraft vorzugsweise zentral von einem Zapfenabschnitt des Ventilkörpers gehalten. Eine besonders hohe Haltekraft ergibt sich dabei durch eine formschlüssige Halterung. Die höchsten Haltekräfte können dabei bei gleichzeitig einfacher konstruktiver Ventilgestaltung dadurch erreicht werden, dass ein Zapfenabschnitt des Ventilkörpers das ringförmige Ventilelement, vorzugsweise zentral, durchsetzt und hintergreift. Zur erleichterten Montage ist es bevorzugt, wenn das Ventilelement durch eine Schnappverbindung am Ventilkörper gehalten ist.

Um sicherzustellen, dass eine Ventileinheit aus Ventilkörper und Ventilelement als vormontierte Baugruppe bereitgestellt werden kann, ist am Ventilkörper vorteilhafterweise wenigstens eine Leitung vorgesehen, welche einen Abschnitt des Kanals bildet und durch das Ventilelement verschließbar ist. Die wenigstens eine Leitung entspricht den oben genannten Durchtrittskanälen.

Das Ventilelement kann zumindest abschnittsweise, vorzugsweise jedoch vollständig, aus einem elastischen Werkstoff gebildet sein. Elastomere Werkstoffe bilden einen guten Kompromiss zwischen der benötigten Materialelastizität und der ebenfalls erforderlichen chemischen Materialbeständigkeit gegen Einflüsse des Schmiermittels. Ein zur Herstellung des Ventilelements besonders geeigneter Werkstoff ist NBR, etwa NBR 70.

Um sicherzustellen, dass zwischen Kupplungskugel und Kupplungspfanne eingebrachtes Schmiermittel möglichst lange dort verbleibt und sowohl den Kupplungsanlagebereich als auch den Niederhalterkontaktbereich schmieren kann, kann die Kupplungspfanne auf ihrer Kupplungsseite eine, vorzugsweise umlaufende, Dichtung umfassen, welche dazu ausgebildet ist, im angekuppelten Zustand der Kupplungspfanne durch Anlage an die Kupplungskugel den Kupplungsanlagebereich gegen die Umgebung abzudichten.

Außerdem kann der Schmiermittelvorrat im Kupplungsanlagebereich dadurch vergrößert werden, dass in dem Kupplungsanlagebereich Schmiermitteltaschen ausgebildet sind, die zur Aufnahme und Speicherung von Schmiermittel im Kupplungsanlagebereich ausgebildet sind. Derartige Schmiermitteltaschen sind aus dem Stand der Technik als Vertiefungsbereiche in der konkaven Anlagefläche des Kupplungsanlagebereichs bekannt..

Besonders bevorzugt weist die Kupplungspfanne gemäß einer Weiterbildung der vorliegenden Erfindung zur Versorgung sowohl des Kupplungsanlagebereichs als auch des Niederhalterkontaktbereichs mit Schmiermittel einen Schmiernippel auf, mit welchem Schmiermittel von der Niederhalterseite in den Kupplungsanlagebereich einbringbar ist. Dieser Schmiernippel ist vorzugsweise auf der Niederhalterseite außerhalb des Niederhalterkontaktbereich vorgesehen, so dass er im Zugbetrieb auch bei der üblicherweise auftretenden Relativbewegung zwischen Kupplungspfanne und Niederhalter nicht mit dem Niederhalter kollidieren kann. Auf diese Art und Weise kann über den Schmiernippel selbst im angekuppelten Zustand Schmiermittel in den Kupplungsanlagebereich und über diesen mittelbar auch in den Niederhalterkontaktbereich verbracht werden. Mit einem einzigen Schmiermittel-Zuführvorgang können somit unterschiedliche Bereiche der Kupplungspfanne auf unterschiedlichen Seiten derselben mit Schmiermittel versorgt werden.

Die zuletzt beschriebene Weiterbildung der Kupplungspfanne gestattet überdies beim Einbringen von Schmiermittel in den Kupplungsanlagebereich in einfacher Weise die Funktionstüchtigkeit der oben beschriebenen vorzugsweise umlaufenden Dichtung zu überprüfen: Dann nämlicn, wenn durch den Schmiernippel ein Schmiermittel in den Kupplungsanlagebereich eingebracht wird, dieses jedoch nicht, wie gewünscht im Niederhalterkontaktbereich zur Niederhalterseite austritt, ist die Dichtung mit großer Wahrscheinlichkeit defekt, da sie der Schmiermittelströmung einen geringeren Widerstand entgegengestellt als das Ventilelement. Dies sollte im normalen Betrieb nicht der Fall sein. Es ist daher zu empfehlen, das Ventilelement derart zu gestalten, dass bei intakter Dichtung und intaktem Ventilelement im angekuppelten Zustand der Kupplungspfanne das Ventilelement - verglichen mit der Dichtung den geringeren Schmiermittelströmungswiderstand aufweist.

Da die oberen beschriebene Kupplungspfanne einer Kugelkupplung einen besonderen Wert verleiht, begehrt die Anmelderin unabhängigen Schutz auch für eine Kugelkupplung mit einer Kupplungskugel und einer Kupplungspfanne, welche entsprechend wenigstens einem Teil der obigen Darlegungen ausgestaltet ist.

Die vorliegende Erfindung wird im folgenden anhand der beiliegenden Zeichnungen näher beschrieben werden. Es stellt dar:
- Fig. 1: eine Querschnittszeichnung durch eine an eine Kupplungskugel angekuppelte erfindungsgemäße Ausführungsform einer Kupplungspfanne und
- Fig. 2: eine vergrößerte Ansicht des Ventils in der Kupplungspfanne von Fig. 1.

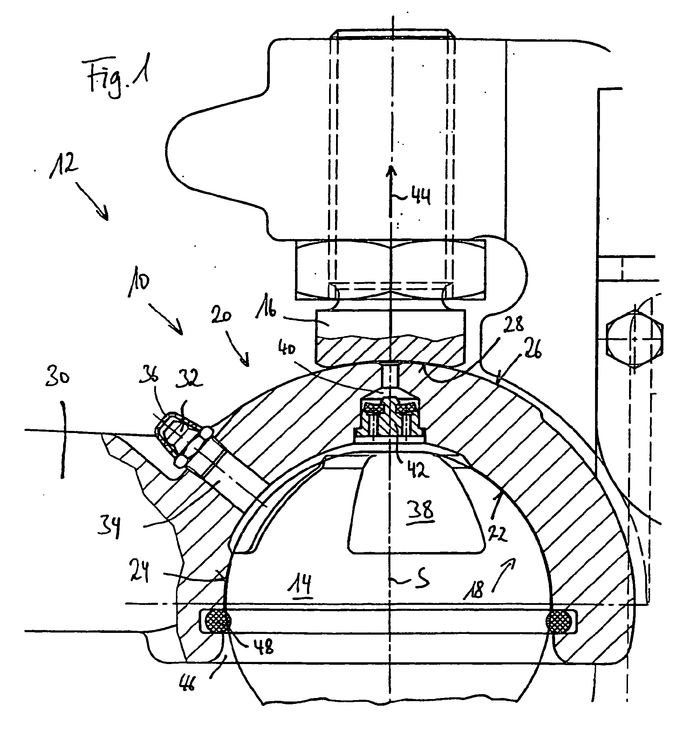

In Fig. 1 ist eine erfindungsgemäße Ausführungsform einer Kupplungspfanne allgemein mit 10 bezeichnet. Diese ist mit einem Nachlauffahrzeug fest verbunden Die Kupplungspfanne 10 ist Teil einer unvollständig dargestellten Kugelkupplung 12 mit einer Kupplungskugel 14 und einem Niederhalter 16. Diese sind mit einem Zugfahrzeug fest verbunden.

Die Kugelpfanne 10 weist eine der Kupplungskugel 10 zugewandte Kupplungsseite 18 sowie eine der Kupplungsseite 18 entgegengesetzte und zum Niederhalter 16 hinweisende Niederhalterseite 20 auf. Auf der Niederhalterseite 20 der Kupplungspfanne 10 ist ein konkaver Kupplungsanlagebereich 22 ausgebildet, in welchem ein konvexer Gegenanlagebereich 24 der Kupplungskugel an der Kupplungsseite 18 der Kupplungspfanne 10 anliegt.

Ebenso ist auf der Niederhalterseite 20 ein in dem in Fig. 1 gezeigten Beispiel konvex ausgestalteter Niederhalterkontaktbereich 26 ausgebildet, an welchen ein konkav ausgestalteter Gegenkontaktbereich 28 des Niederhalters 16 in Anlage kommt. Ein den Niederhalterkontaktbereich 26 und einen auf der entgegengesetzten Seite der Kupplungspfanne gelegenen Abschnitt des Kupplungsanlagebereichs 22 umfassender Abschnitt der Kupplungspfanne ist somit zwischen der Kupplungskugel 14 und dem Niederhalter 16 angeordnet.

In einem einer Deichselstange 30, an deren Längsende die Kupplungspfanne 10 vorgesehen ist, nahe gelegenen Bereich ist ein Schmiernippel 32 auf der Niederhalterseite 20 der Kupplungspfanne 10 außerhalb des Niederhalterkontaktbereichs 26 angeordnet. Der Schmiernippel 32 ist in einen ersten die Kupplungspfanne 10 durchsetzenden ersten Kanal 34 eingeschraubt. Der mit einer abnehmbaren Kappe 36 abgedeckte Schmiernippel 32 gestattet, Schmiermittel durch den ersten Kanal 34 in den Kupplungsanlagebereich 22 einzubringen. Zur Erhöhung der in den Kupplungsanlagebereich 22 einbringbaren Schmiermittelmenge sind in dem Kupplungsanlagebereich 22 Schmiermitteltaschen 38 in an sich bekannter Weise ausgebildet.

Weiterhin ist in der Kupplungspfanne ein zweiter die Kupplungspfanne vom Kupplungsanlagebereich 22 zum Niederhalterkontaktbereich 26 durchsetzender Kanal 40 ausgebildet. In dem zweiten Kanal 40 ist ein Ventil 42 angeordnet, welches Schmiermittel nur längs des Pfeiles 44 vom Kupplungsanlagebereich 22 zum Niederhalterkontaktbereich 26 durchlässt und in der entgegengesetzten Richtung eine Schmiermittelströmung sperrt. Die in der konkaven Oberfläche der Kupplungspfanne 10 auf der Kupplungsseite 18 als Vertiefung ausgebildeten Schmiermitteltaschen 38 bilden eine Strömungsverbindung vom ersten Kanal 34 zum zweiten Kanal 40, so dass beim Einleiten von Schmiermittel in den Kupplungsanlagebereich 22 das Schmiermittel vom Schmiernippel 32 durch den ersten Kanal 34 über die Schmiermitteltaschen 38 durch das Ventil 42 längs des zweiten Kanals 40 schließlich zum Niederhalterkontaktbereich 26 gelangt.

Um sicherzustellen, dass das Schmiermittel im Kupplungsanlagebereich 22 verbleibt ist nahe eines Mündungsbereichs 46 des Kupplungsanlagebereichs 22 eine umlaufende Dichtung 48 vorgesehen, welche im angekuppelten Zustand der Kupplungspfanne dichtend an der Kupplungskugel 14 anliegt.

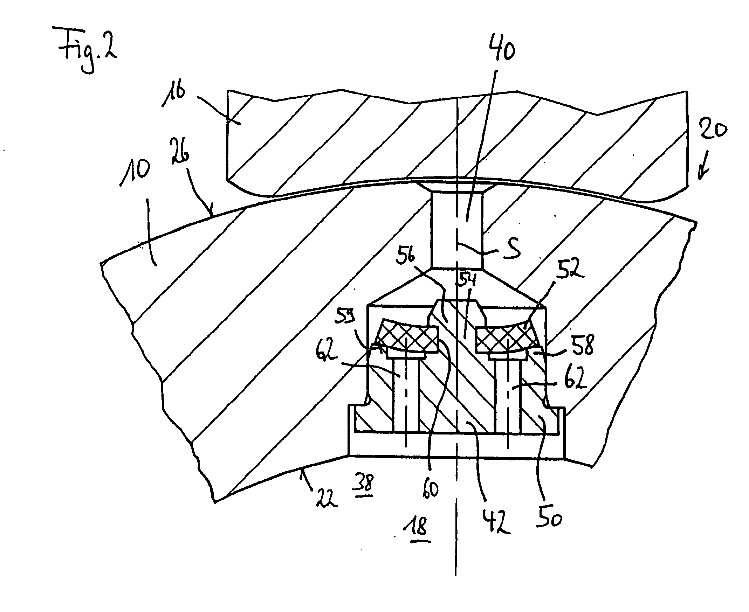

In Fig. 2 ist der das Ventil 42 tragende Abschnitt der Kugelpfanne 10 als Ausschnitt vergrößert dargestellt.

Wie in Fig. 2 zu erkennen ist, umfasst das Ventil 42 einen Ventilkörper 50 mit einem daran gehaltenen elastomeren Ventilelement 52. Das Ventilelement 52 aus dem Material NBR 70 ist eine Ringscheibe mit einer zentralen Öffnung 54, welche von einem Zapfen 56 des Ventilkörpers 50 durchsetzt ist. Der Zapfen ist an seinem freien Längsende mit einer Verdickung ausgebildet, so dass er das ringscheibenförmige Ventilelement 52 hintergreift und formschlüssig am Ventilkörper 50 hält. Das ringscheibenförmige Ventilelement 52 ist auf den Ventilkörper unter Bildung einer Schnappverbindung aufgeschnappt.

Außerdem ist am Ventilkörper 50 ein umlaufender ringförmiger Ventilsitz 58 ausgebildet, auf welchem das Ventilelement 52 mit einem Außenumfangsbereich 59 aufliegt. Der Ventilsitz 58 ist bezüglich des zentralen Haltebereichs 60, mit welchem das ringscheibenförmige Ventilelement 52 am Ventilkörper 50 gehalten ist, zum Niederhalterkontaktbereich 26 hin versetzt, so dass das Ventilelement 52 in seiner in Fig. 2 gezeigten Ventilschließgestalt an seinem Außenumfangsbereich 59 durch Auflage auf dem Ventilsitz 58 zur Niederhalterseite 20 hin verformt ist. Dadurch liegt das Ventilelement 52 aufgrund seiner Materialelastizität unter einer Schließvorspannung auf dem Ventilsitz 58 auf.

Dann, wenn Schmiermittel unter Druck von dem Kupplungsanlagebereich 22 aus den Schmiermitteltaschen 38 zum Niederhalterkontaktbereich 26 hin zu strömen beginnt, strömt das Schmiermittel durch eine Mehrzahl von im Ventilkörper 50 ausgebildeten Leitungen 62 und drückt gegen das Ventilelement 52. Unter der Wirkung dieses Druckes wird der Außenumfangsbereich 59 des an seinem Haltebereich 60 fest eingespannten Ventilelements 52 vom Ventilsitz 58 abheben und so den zweiten Kanal 40 freigeben. Diese verformungsbedingte Öffnung des Ventils 42 endet, sobald die durch den Druck des Schmiermittels auf die zur Kupplungsseite 18 weisende Seite des Ventilelement 52 ausgeübte Kraft kleiner als die durch Verformung und Materialelastizität des Ventilelements 52 hervorgerufene, zur Kupplungsseite 18 hin wirkende Rückstellkraft geworden ist. Dann wird sich das Ventilelement 52 zurück in seine Ventilschließgestalt verformen und in Anlage an den Ventilsitz 58 gelangen. Das Ventil 42 ist dann sicher gegen einen Eintritt von Schmutz oder/und Feuchtigkeit in den Kupplungsanlagebereich 22 von der Niederhalterseite 20 her geschlossen.

Das Ventil 42 ist in dem in Fig. 2 gezeigten Beispiel in den Kanal 40 eingepresst. Ebenso kann das Ventil 42 jedoch in den Kanal 40 eingeschraubt oder/und eingeklebt oder/und eingelötet oder/und eingeschweißt sein. Aus Gründen einer bevorzugten symmetrischen Kraftbelastung des Ventils 42 ist dieses rotationssymmetrisch ausgebildet. Die Leitungen 62 sind mit identischem Abstand von der Symmetrieachse S und in Umfangsrichtung um die Symmetrieachse S mit gleichem Winkelabstand angeordnet.

## Patentansprüche

1. Kupplungspfanne (10) für eine Zugöse zur Verbindung mit einer Kupplungskugel (14) einer Kugelkupplung (12), wobei die Kupplungspfanne (10) auf einer Kupplungsseite (18) einen konkaven Kupplungsanlagebereich (22) aufweist, an welchem im angekuppelten Zustand der Kupplungspfanne (10) ein konvexer Gegenanlagebereich (24) der Kupplungskugel (14) anliegt, und wobei die Kupplungspfanne (10) weiter auf einer der Kupplungsseite (18) entgegengesetzten Niederhalterseite (20) einen Niederhalterkontaktbereich (26) aufweist, welcher zur Anlage an einen Gegenkontäktbereich (28) eines Niederhalters (16) ausgebildet ist, der im angekuppelten Zustand der Kupplungspfanne (10) eine Abhebebewegung der Kupplungspfanne (10) von der Kupplungskugel (14) weg begrenzt, wobei die Kupplungspfanne (10) von einem Kanal (40) durchsetzt ist, welcher den Kupplungsanlagebereich (22) und den Niederhalterkontaktbereich (26) miteinander verbindet, **dadurch gekennzeichnet, dass** in dem Kanal (40) ein Ventil (42) vorgesehen ist, welches eine Strömung von Schmiermittel von der Kupplungsseite (18) zur Niederhalterseite (20) gestattet und eine Schmiermittelströmung in entgegengesetzter Richtung sperrt.

2. Kupplungspfanne nach Anspruch 1,
**dadurch gekennzeichnet, dass** das Ventil (42) einen Ventilkörper (50) und ein von diesem gehaltenes elastisches Ventilelement (52) aufweist, welches unter Ausübung von Kraft gegen eine durch seine Materialelastizität bewirkte Rückstellkraft von einer Ventilschließgestalt, in welcher der Kanal (40) durch das Ventilelement (52) unterbrochen ist, in eine Ventilöffnungsgestalt, in welcher der Kanal (40) durch das Ventilelement (52) nicht unterbrochen ist, verformbar ist.

3. Kupplungspfanne nach Anspruch 2,
**dadurch gekennzeichnet, dass** das Ventilelement (52) in seiner Ventilschließgestalt, bezogen auf einen unbelasteten Zustand des Ventilelements (52), verformt ist.

4. Kupplungspfanne nach Anspruch 3,
**dadurch gekennzeichnet, dass** das Ventilelement (52) in seiner Ventilschließgestalt mit einer Schließvorspannkraft an einem Ventilsitz (58) des Ventilkörpers (50) anliegt.

5. Kupplungspfanne nach einem der Ansprüche 2 bis 4,
**dadurch gekennzeichnet, dass** das Ventilelement (52) einen Ring, vorzugsweise eine Ringscheibe, umfasst, welcher in einem zentralen Abschnitt am Ventilkörper (50) gehalten ist und in seiner Ventilschließgestalt in seinem Außenumfangsbereich (59) an einem Ventilsitz (58) des Ventilkörpers (50) anliegt.

6. Kupplungspfanne nach Anspruch 5, unter Einbeziehung des Anspruchs 4,
**dadurch gekennzeichnet, dass** der Ventilkörper (50) einen ringförmigen Ventilsitz (58) aufweist, an welchem das Ventilelement (52) in seiner Ventilschließgestalt mit seinem Außenumfangsbereich (59) anliegt, wobei die Auflagefläche des Ventilsitzes (58) gegenüber einem Halte-bereich (60), an welchem das Ventilelement (52) am Ventilkörper (50) gehalten ist, derart versetzt vorgesehen ist, dass das Ventilelement (52) verformt an dem Ventilsitz (58) aufliegt.

7. Kupplungspfanne nach Anspruch 5 oder 6,
**dadurch gekennzeichnet, dass** das ringförmige Ventilelement (52) zentral von einem Zapfenabschnitt (56) des Ventilkörpers (50) gehalten, insbesondere formschlüssig gehalten, besonders bevorzugt durchsetzt und hintergriffen ist.

8. Kupplungspfanne nach einem der Ansprüche 2 bis 7,
**dadurch gekennzeichnet, dass** das Ventilelement (52) durch eine Schnappverbindung am Ventilkörper (50) gehalten ist.

9. Kupplungspfanne nach einem der Ansprüche 2 bis 8,
**dadurch gekennzeichnet, dass** am Ventilkörper (50) wenigstens eine Leitung (62) vorgesehen ist, welche einen Abschnitt des Kanals (40) bildet und durch das Ventilelement (52) verschließbar ist.

10. Kupplungspfanne nach einem der Ansprüche 2 bis 9,
**dadurch gekennzeichnet, dass** das Ventilelement (52) zumindest abschnittsweise, vorzugsweise jedoch vollständig, aus einem elastomeren Werkstoff gebildet ist, etwa aus NBR, insbesondere aus NBR 70.

11. Kupplungspfanne nach einem der vorhergehenden Ansprüche,
**dadurch gekennzeichnet, dass** die Kupplungspfanne (10) auf ihrer Kupplungsseite (18) eine, vorzugsweise umlaufende, Dichtung (48) aufweist, welche dazu ausgebildet ist, im angekuppelten Zustand der Kupplungspfanne (10) den Kupplungsanlagebereich (22) gegen die Umgebung abzudichten.

12. Kupplungspfanne nach einem der vorhergehenden Ansprüche,
**dadurch gekennzeichnet, dass** der Kupplungsanlagebereich (22) darin ausgebildete Schmiermitteltaschen (38) aufweist, die zur Aufnahme und Speicherung von Schmiermittel im Kupplungsanlagebereich (22) ausgebildet sind.

13. Kupplungspfanne nach einem der vorhergehenden Ansprüche,
**dadurch gekennzeichnet, dass** sie einen Schmiernippel (32) aufweist, mit welchem Schmiermittel von der Niederhalterseite (20) aus in den Kupplungsanlagebereich (22) einbringbar ist.

14. Kugelkupplung mit einer Kupplungskugel (14) und einer Kupplungspfanne (10) gemäß einem der vorhergehenden Ansprüche.

## Claims

1. A hitch socket (10) for a drawbar eye for connection with a hitch ball (14) of a ball hitch (12), the hitch socket (10) comprising a concave hitch bearing area (22) on a hitch side (18), against which hitch bearing area there rests a convex mating bearing area (24) of the hitch ball (14) when the hitch socket (10) is hitched up, and the hitch socket (10) further comprising a retainer contact area (26) on a retainer side (20) opposite the hitch side (18), which retainer contact area is designed to rest against a mating contact area (28) of a retainer (16), which, when the hitch socket (10) is hitched up, restricts lift-off movement of the hitch socket (10) away from the hitch ball (14), the hitch socket (10) having a channel (40) passing through it, which connects the hitch bearing area (22) and the retainer contact area (26) together, **characterised in that** a valve (42) is provided in the channel (40), which valve provides flow of lubricant from the hitch side (18) to the retainer side (20) and blocks lubricant flow in the opposite direction.

2. A hitch socket according to claim 1,
**characterised in that** the valve (42) comprises a valve body (50) and a resilient valve element (52) held thereby, which latter is deformable, if force is exerted against a restoring force brought about by its material resilience, from a valve closing shape, in which the channel (40) is interrupted by the valve element (52), into a valve opening shape, in which the channel (40) is not interrupted by the valve element (52).

3. A hitch socket according to claim 2,
**characterised in that** the valve element (52) is deformed in its valve closing shape relative to an unloaded state of the valve element (52).

4. A hitch socket according to claim 3,
**characterised in that** the valve element (52) rests in its valve closing shape with a pretensioning closing force against a valve seat (58) of the valve body (50) .

5. A hitch socket according to any one of claims 2 to 4,
**characterised in that** the valve element (52) comprises a ring, preferably an annular disc, which is held in a central portion on the valve body (50) and rests in its valve closing shape in its outer circumferential area (59) against a valve seat (58) of the valve body (50) .

6. A hitch socket according to claim 5, taking account of claim 4,
**characterised in that** the valve body (50) comprises an annular valve seat (58), on which the valve element (52) rests with its outer circumferential area (59) in its valve closing shape, the bearing face of the valve seat (58) being provided offset relative to a holding area (60), at which the valve element (52) is held on the valve body (50), in such a way that the valve element (52) rests in a deformed manner against the valve seat (58).

7. A hitch socket according to claim 5 or claim 6,
**characterised in that** the annular valve element (52) is held centrally in particular in a form-fitting manner, particularly preferably is passed through and engaged behind, by a peg portion (56) of the valve body (50).

8. A hitch socket according to any one of claims 2 to 7,
**characterised in that** the valve element (52) is held on the valve body (50) by a snap-fit connection.

9. A hitch socket according to any one of claims 2 to 8,
**characterised in that** at least one duct (62) is provided on the valve body (50), which duct (62) forms a portion of the channel (40) and is closable by the valve element (52).

10. A hitch socket according to any one of claims 2 to 9,
**characterised in that** the valve element (52) is formed, at least in places, but preferably completely, of an elastomeric material, for instance of NBR, in particular of NBR 70.

11. A hitch socket according to any one of the preceding claims, **characterised in that** the hitch socket (10) comprises a preferably circumferential seal (48) on its hitch side (18), which seal (48) is designed to seal the hitch bearing area (22) against the surrounding environment when the hitch socket (10) is hitched up.

12. A hitch socket according to any one of the preceding claims, **characterised in that** the hitch bearing area (22) comprises lubricant pockets (38) formed therein, which are designed to accommodate and store lubricant in the hitch bearing area (22).

13. A hitch socket according to any one of the preceding claims, **characterised in that** it comprises a grease nipple (32), with which lubricant may be introduced from the retainer side (20) into the hitch bearing area (22).

14. A ball hitch with a hitch ball (14) and a hitch socket (10) according to any one of the preceding claims.

## Revendications

1. Coquille d'attelage (10) pour un anneau d'attelage pour l'assemblage à une boule d'attelage (14) d'un attelage à boule (12), dans laquelle la coquille d'attelage (10) présente sur un côté d'attelage (18) une zone d'appui d'attelage concave (22), sur laquelle, dans l'état attelé de la coquille d'attelage (10), une zone d'appui opposée convexe (24) de la boule d'attelage (14) repose, et dans laquelle la coquille d'attelage (10) présente en outre sur un côté de poussoir (20) opposé au côté d'attelage (18) une zone de contact de poussoir (26), qui est conçue en vue de l'appui sur une zone de contact de poussoir (28) d'un poussoir (16) qui, dans l'état attelé de la coquille d'attelage (10), limite un mouvement de soulèvement de la coquille d'attelage (10) l'écartant de la boule d'attelage (14), dans laquelle la coquille d'attelage (10) est traversée par un canal (40), qui relie l'une à l'autre la zone d'appui d'attelage (22) et la zone de contact de poussoir (26), **caractérisée en ce qu'**il est prévu dans le canal (40) une soupape (42), qui permet un écoulement de lubrifiant du côté d'attelage (18) au côté de poussoir (20) et empêche un écoulement de lubrifiant dans le sens contraire.

2. Coquille d'attelage selon la revendication 1, **caractérisée en ce que** la soupape (42) présente un corps de soupape (50) et un élément de soupape élastique (52) maintenu par celui-ci, qui est déformable sous l'action d'une force exercée contre une force de rappel produite par son élasticité matérielle depuis une configuration de fermeture de soupape, dans laquelle le canal (40) est interrompu par l'élément de soupape (52), à une configuration d'ouverture de soupape, dans laquelle le canal (40) n'est pas interrompu par l'élément de soupape (52).

3. Coquille d'attelage selon la revendication 2, **caractérisée en ce que** l'élément de soupape (52) dans sa configuration de fermeture de soupape est déformé par rapport à un état non chargé de l'élément de soupape (52).

4. Coquille d'attelage selon la revendication 3, **caractérisée en ce que** l'élément de soupape (52) dans sa configuration de fermeture de soupape s'applique avec une force de précontrainte de fermeture sur un siège de soupape (58) du corps de soupape (50).

5. Coquille d'attelage selon l'une quelconque des revendications 2 à 4, **caractérisée en ce que** l'élément de soupape (52) comprend un anneau, de préférence un disque annulaire, qui est maintenu dans une partie centrale sur le corps de soupape (50) et qui, dans sa configuration de fermeture de soupape, s'applique par sa région périphérique extérieure (59) sur un siège de soupape (58) du corps de soupape (50).

6. Coquille d'attelage selon la revendication 5, avec incorporation de la revendication 4, **caractérisée en ce que** le corps de soupape (50) présente un siège de soupape annulaire (58), sur lequel l'élément de soupape (52) dans sa configuration de fermeture de soupape s'applique par sa région périphérique extérieure (59), dans laquelle la face d'appui du siège de soupape (58) est prévue avec un tel décalage par rapport à une zone de maintien (60), sur laquelle l'élément de soupape (52) est maintenu sur le corps de soupape (50), que l'élément de soupape (52) s'applique en étant déformé sur le siège de soupape (58).

7. Coquille d'attelage selon la revendication 5 ou 6, **caractérisée en ce que** l'élément de soupape annulaire (52) est maintenu au centre par une partie de tourillon (56) du corps de soupape (50), en particulier en complémentarité de forme, et est en particulier de préférence traversé et accroché par l'arrière.

8. Coquille d'attelage selon l'une quelconque des revendications 2 à 7, **caractérisée en ce que** l'élément de soupape (52) est maintenu par un assemblage à encliquetage sur le corps de soupape (50).

9. Coquille d'attelage selon l'une quelconque des revendications 2 à 8, **caractérisée en ce qu'**il est prévu sur le corps de soupape (50) au moins une conduite (62), qui forme une partie du canal (40) et qui peut être fermée par l'élément de soupape (52).

10. Coquille d'attelage selon l'une quelconque des revendications 2 à 9, **caractérisée en ce que** l'élément de soupape (52) est formé au moins localement, mais de préférence entièrement, en un matériau élastomère, par exemple en NBR, en particulier en NBR 70.

11. Coquille d'attelage selon l'une quelconque des revendications précédentes, **caractérisée en ce que** la coquille d'attelage (10) présente sur son côté d'attelage (18) un joint d'étanchéité (48), de préférence périphérique, qui est conçu pour assurer à l'état attelé de la coquille d'attelage (10) l'étanchéité de la zone d'appui d'attelage (22) par rapport à l'environnement extérieur.

12. Coquille d'attelage selon l'une quelconque des revendications précédentes, **caractérisée en ce que** la zone d'appui d'attelage (22) présente des ailettes de lubrifiant (38) formées dans celle-ci, qui sont conçues pour recevoir et accumuler du lubrifiant dans la zone d'appui d'attelage (22).

13. Coquille d'attelage selon l'une quelconque des revendications précédentes, **caractérisée en ce qu'**elle présente un graisseur (32), avec lequel un lubrifiant peut être introduit dans la zone d'appui d'attelage (22) à partir du côté de poussoir (20).

14. Attelage à boule avec une boule d'attelage (14) et une coquille d'attelage (10) selon l'une quelconque des revendications précédentes.
